# EUROPÄISCHE PATENTSCHRIFT

(11) **EP 1 501 704 B1**
(45) Veröffentlichungstag und Bekanntmachung des Hinweises auf die Patenterteilung: **08.03.2006**
(21) Anmeldenummer: 02776721.9
(22) Anmeldetag: 25.09.2002
(51) Int. Cl.: B60R 21/01

(54) **VERFAHREN UND ANORDNUNG ZUR ANSTEUERUNG VON RÜCKHALTEMITTELN**
METHOD AND SYSTEM FOR ACTUATING RESTRAINING MEANS
PROC D ET DISPOSITION POUR AMORCER DES DISPOSITIFS DE RETENUE

(30) Priorität: 23.03.2002 DE 10212963
(43) Veröffentlichungstag der Anmeldung: 02.02.2005
(73) Patentinhaber: ROBERT BOSCH GMBH, 70442 Stuttgart (DE)
(72) Erfinder: SCHLICK, Michael, 71229 Leonberg (DE); HOETZEL, Juergen, 61197 Florstadt (DE); SOHNKE, Thorsten, 65719 Hofheim (DE); WEBER, Dirk, 71701 Schwieberdingen (DE); KUTTENBERGER, Alfred, 71696 Moeglingen (DE)
(86) Internationale Anmeldenummer: PCT/DE2002/003623
(87) Internationale Veröffentlichungsnummer: WO 2003/080400

(56) Entgegenhaltungen:
- DE-A- 19 736 840
- DE-A- 19 957 187
- DE-A- 19 961 799

## Beschreibung

### Stand der Technik

Die Erfindung betrifft ein Verfahren und eine Anordnung zur Ansteuerung von insbesondere reversibel ansteuerbaren Rückhaltemitteln für Personen in einem Sitz in einem Fahrzeug bei der Erfassung einer Situation, bei der mit einer Kollision zwischen dem Fahrzeug und einem Objekt zu rechnen ist.

In zunehmenden Masse werden nicht nur Fahrzeuge der gehobenen Klasse zum Schutz der Insassen im Falle eines Unfalles serienmäßig mit irreversibel ansteuerbaren Rückhaltemitteln wie pyrotechnisch zündbaren Airbags und pyrotechnisch zündbaren Gurtstraffern ausgerüstet, sondern auch mit reversibel ansteuerbaren Rückhaltemitteln, wie motorisch arbeitenden Gurtstrammern, um zur Vorbereitung auf eine unmittelbar bevorstehende Kollision die jeweilige Person in dem Sitz in eine besonders günstige Position zu bringen bzw. in dieser zu fixieren (DE 44 11 184 C2). Dabei ist es durchaus auch üblich, den Sitz im gegebenen Fall zu verstellen, beispielsweise die Lehne steil zu stellen und die Kopfstütze nach vorne zu neigen. Wesentliche Bedeutung kommt nicht nur der Erfassung der tatsächlichen Kollision sondern auch der Beurteilung zu, ob aufgrund von Umgebungsbedingungen eine Kollision zu erwarten ist (sogenannte Precrash-Sensorik). Von wesentlicher Bedeutung ist dabei, dass ein Auslösen der irreversibel ansteuerbaren Rückhaltemittel im Kollisionsfall mit hohem Verletzungsrisiko sichergestellt sein muss, deren fehlerhaftes Auslösen jedoch unbedingt zu vermeiden ist. Somit kommt die Verwendung eines Sensorsystems, das lediglich die Unfallschwere aufgrund Unfallstatistiken ermittelt oder wichtige Größen wie Masse; außer Acht lässt, als zu unsicher nicht in Frage.

Für die Ansteuerung bzw. Auslösung der irreversibel ansteuerbaren Rückhaltemittel darf daher nur das tatsächliche Vorliegen einer gefährlichen Kollision herangezogen werden. Als sicherstes Mittel wird das Vorsehen mindestens eines elektromechanisch oder elektrisch wirkenden Beschleunigungssensors angesehen, der am Fahrzeug befestigt ist und eine unter einer bestimmten Vorbelastung stehende träge oder seismische Masse aufweist. Die Vorbelastung ist dabei so bestimmt, dass selbst bei Notbremsvorgängen die Masse sich nicht wesentlich bewegt, während im Fall einer tatsächlichen und gefährlichen Kollision sich die Masse entgegen der Vorbelastungskraft bewegt, einen Schalter betätigt und ein entsprechendes Signal an die Ansteuer- bzw. Auslöseeinrichtung der irreversibel ansteuerbaren Rückhaltemittel abgibt (vgl. z. B. Bosch, kraftfahrtechnisches Taschenbuch, 20. Aufl., 1987, S. 628/629).

Eine übliche Vorgehensweise bei der Precrash-Sensorik ist es, aus einer großen Anzahl verschiedener getrennt zu erfassender Größen ein Maß für die Unfallschwere der zu erwartenden Kollision abzuschätzen und die Rückhaltemittel entsprechend anzusteuern und auch auszulösen. Dies ist offensichtlich umständlich und stark fehlerbehaftet, so dass im tatsächlichen Fall einer gefährlichen Kollision die schützende Funktion der Rückhaltemittel nicht gewährleistet werden kann.

Aus DE 19736840, die dem Oberbegriff der unabhängigen Ansprüche 1 und 3 entspricht, ist bereits ein Rückhaltesystem bekannt, bei dem mittels einer Pre-Crash-Sensorik, die beispielsweise eine Einparkhilfe sein kann, die Richtung, mit der ein Objekt auf das Fahrzeug treffen kann und auch der Aufprallort, sowie die Relativgeschwindigkeit bestimmt werden können. Insbesondere können Gurtstraffer und damit reversible Rückhaltemittel angesteuert werden. Aus DE 19961799 A 1 ist ein passives Sicherheitssystem bekannt, das eine Pre-Crash-Sensorik aufweist und bei dem bei einer kritischen Fahrsituation, die sich aus den Signalen der Pre-Crash-Sensorik ergibt, die Sicherheitseinrichtungen kurzzeitig in einen Sicherheitszustand gebracht werden. Wenn nach Ablauf einer kurzen Zeit kein Crash durch einen Crash-Sensor festgestellt wird, wird die jeweilige Sicherheitseinrichtung aus dem Sicherheitszustand bzw. der Sicherheitszwischenstellung in den Normalzustand bzw. Ausgangszustand zurückgebracht. Dies betrifft beispielsweise auch die Rückenlehne und die Kopfstütze, die dann wieder in ihre Ausgangsposition zurückgefahren werden.

Ausgehend hiervon ist es Aufgabe der vorliegenden Erfindung, die Precrash-Sensorik dahingehend weiter zu entwickeln, dass bei einfachem Aufbau eine sichere, d. h. rechtzeitige und weitgehend fehlerfreie Ansteuerung der reversiblen Rückhaltemittel möglich ist.

### Vorteile der Erfindung

Die Aufgabe wird durch die Merkmale der unabhängigen Ansprüche gelöst.

Die Erfindung wird durch die Merkmale der abhängigen Ansprüche weitergebildet.

Die Erfindung geht dabei von der Erkenntnis aus, dass eine einzige einfache Messung unabhängig von der Beschleunigungsmessung für den tatsächlichen Kollisionsfall dann genügt, wenn aus ihr durch fahrzeugseitige Auswertung kontinuierlich oder quasi kontinuierlich ableitbar ist, ob Objekte außerhalb des Fahrzeuges vorhanden sind und ob bei solchen Objekten die Gefahr einer Kollision zu erwarten ist. Die Erfindung erreicht dies durch eine einfache kontinuierliche Abstandsmessung zu einem oder jedem in einem Erfassungsbereich eines Abstandsmessers vorhandenen Objekt. Aus dieser kontinuierlichen Messung des Abstandes sowie aus gespeicherten statistisch ermittelten bzw. aufbereiteten Daten lässt sich in einfacher Weise durch lediglich Vergleichen ableiten, ob und gegebenenfalls mit welcher möglichen Unfallschwere im Falle einer tatsächlichen Kollision gerechnet werden muss. Somit können die Rückhaltemittel entsprechend optimal und gegebenenfalls für jeden Sitz unterschiedlich angesteuert oder vorbereitet werden.

Ferner lassen sich aus der kontinuierlichen Messung des Abstandes alle Größen ableiten, aufgrund deren beurteilt werden kann, ob und wann eine Kollision zu erwarten ist und gegebenenfalls an welcher Stelle des Fahrzeuges und aus welcher Richtung.

### Zeichnung

Die Erfindung wird anhand des in der Zeichnung dargestellten Ausführungsbeispiels näher erläutert. Es zeigen:
- Fig. 1: schematisch den grundsätzlichen Aufbau einer erfindungsgemäßen Anordnung,
- Fig. 2: schematisch die Vorgänge bei der gegenseitigen Annäherung zwischen einem Fahrzeug und einem Objekt,
- Fig. 3: schematisch eine Vergrößerung aus Fig. 2 zur Darstellung der Ermittelbarkeit kollisionsrelevanter Größen.

### Beschreibung eines Ausführungsbeispieles

Mindestens einem Sitz (nicht dargestellt) in einem Fahrzeug 1 sind eine Reihe von Rückhaltemittel zugeordnet, von denen im allgemeinen ein Teil irreversibel ansteuerbar ist, etwa durch pyrotechnische Zündung und von denen ein Teil reversibel ansteuerbar ist, etwa mittels Elektromotoren. Beispielhaft für ein irreversibel ansteuerbares Rückhaltemittel sind ein Airbag 2 und ein pyrotechnisch zündbarer Gurtstraffer 3 vorgesehen. Als Beispiel reversibel ansteuerbarer Rückhaltemittel sind ein motorisch angetriebenes Rückhaltesystem, wie ein Gurtstrammer 4 und ein Sitzverstellsystem 5 vorgesehen, mittels dem Sitzfläche, Rücklehne und/oder Kopfstütze und/oder Armlehnen in eine vorgegebene Position verstellbar sind. In dem Fahrzeug 1 ist ferner insbesondere ein Beschleunigungssensor 6 an sich bekannter Bauart vorgesehen, der aufgrund seiner Bauart, durch eine Auswerteanordnung 7 symbolisiert, laufend feststellt, ob eine Kollision stattgefunden hat. Im gegebenen Fall wird ein entsprechendes Auslösesignal über ein Netzwerk 8 an alle Rückhaltemittel 2 bis 5 zu deren Auslösung abgegeben, derart, dass die irreversibel ansteuerbaren Rückhaltemittel 2, 3 nur aufgrund dieses Signals auslösbar sind und die reversibel ansteuerbaren Rückhaltemittel 4, 5 jedenfalls spätestens bei Vorliegen dieses Signals angesteuert werden.

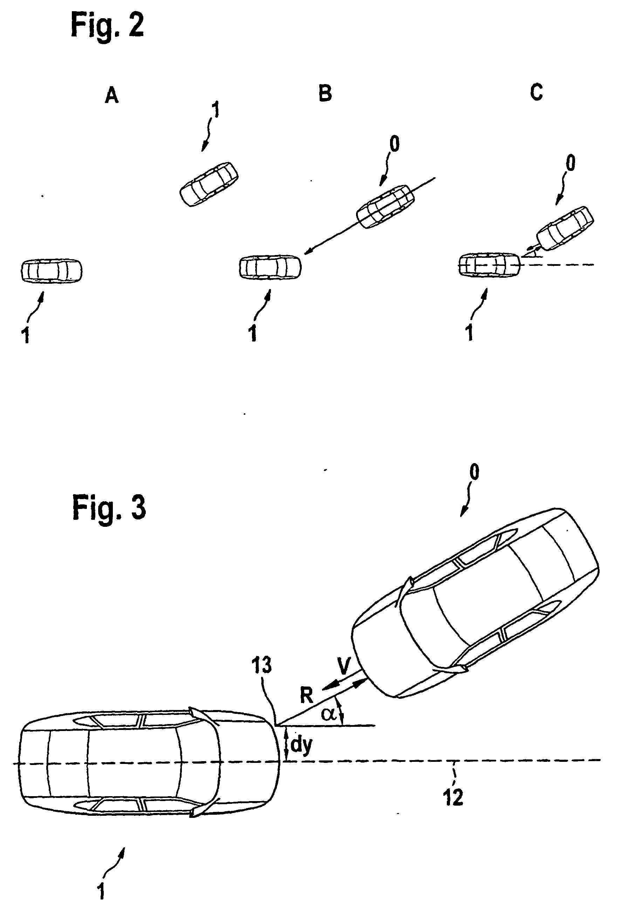

Gemäß der vorliegenden Erfindung ist ferner mindestens ein Entfernungsmesser oder Abstandssensor 9 vorgesehen, der in der Lage ist, den Abstand zu einem oder jedem in seinem Erfassungsbereich befindlichen Objekt O (Fig. 2 und Fig. 3) zu messen. Ein solcher Sensor ist beispielsweise ein Radargerät, wie ein 24GHz-Short-Range-Radar-Sensor oder ein Video-Sensor. Wesentlich ist, dass die Abstandsmessung zu mindestens einem Objekt O im Erfassungsbereich kontinuierlich oder quasi-kontinuierlich, d. h., ständig mit nur sehr geringen Zeitabständen zwischen jeder Messung, erfolgt. Dieses Mess- oder Erfassungssignal wird in einer Auswerteschaltung 10 ebenfalls laufend daraufhin untersucht, ob bestimmte Kriterien vorliegen; aufgrund deren mit einer Kollision gerechnet werden kann oder muss, wie dies weiter unten erläutert wird.

Wenn die Auswerteschaltung 10 ermittelt, dass mit einer für den in dem betroffenen Sitz befindlichen Person gefährlichen Unfall (Crash) aufgrund einer zu erwartenden Kollision zwischen dem Fahrzeug 1 und dem Objekt O gerechnet werden muss, werden über ein Netzwerk 11 entsprechende Signale an die genannten irreversibel ansteuerbaren und reversibel ansteuerbaren Rückhaltemittel 2 bis 5 übermittelt. Für die verschiedenen Rückhaltemittel 2 bis 5 können dabei insbesondere nach Beurteilung der zu erwartenden Kollision unterschiedliche Signale gegebenenfalls auch zu unterschiedlichen Zeiten übermittelt werden.

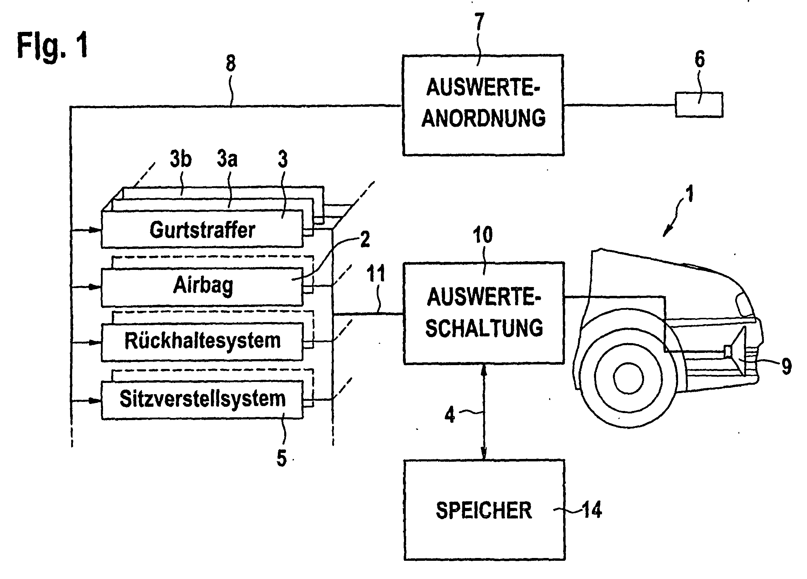

Jedes der in Fig. 1 schematisch dargestellten Rückhaltemittel 2 bis 5 weist eine zugeordnete Ansteuerschaltung auf, die das Rückhaltemittel 2, ... 5 selbst jedenfalls in einen vorbereitenden Zustand versetzt (voransteuert) und sogar, bei Vorliegen bzw. Beurteilen des Vorliegens entsprechender Kriterien, jedenfalls die reversibel ansteuerbaren Rückhaltemittel 4, 5, jedoch nicht die irreversibel ansteuerbaren Rückhaltemittel 2, 3, auszulösen vermag.

Fig. 1 zeigt ferner, dass der Auswerteschaltung 10 ein Speicher 14 zugeordnet ist. In dem Speicher 14, der eine bauliche Einheit mit der Auswerteschaltung 10 besitzen kann, sind statistisch ausgewertete bzw. aufbereitete Daten abgespeichert, mittels denen aufgrund eines festgestellten Abstandes oder zumindest einer Änderung des Abstandes über die Zeit für den Fall einer Kollision auf eine voraussichtliche Schwere des Unfalles geschlossen werden kann. Aufgrund der durch die Auswerteschaltung 10 ermittelten Abschätzung der Gefahr einer bevorstehenden Kollision und den aus dem Speicher 14 abgerufenen Daten über eine mögliche Unfallschwere können daher die von der Auswerteschaltung 10 in das Netzwerk 11 eingegebenen und damit den Rückhaltemitteln 2, ... 5 zugeführten Signale daraufhin angepasst werden, mit welcher Unfallschwere im. Fall der tatsächlichen Kollision, die mittels des Beschleunigungssensors 6 ermittelt wird, gerechnet werden muss. Hierdurch kann eine geeignete Voransteuerung der Rückhaltemittel in jeweils an die zu erwartende Unfallschwere angepasster Weise erfolgen. Beispielsweise kann, wenn mit einem schweren Unfall gerechnet werden muss, bereits vor der Erfassung der Kollision mittels -des Beschleunigungssensors 6 das Sitzverstellsystem 5 ausgelöst werden, derart, dass die Teile des Sitzes in die für den zu erwartenden Unfall optimale Position verstellt werden. Beispielsweise kann ferner, wenn mit einem eher seitlich erfolgenden schweren Aufprall gerechnet werden muss, eine Voransteuerung von Seitenairbags und/oder Fensterairbags des unmittelbar betroffenen Sitzes in anderer Weise erfolgen, als die eines anderen Sitzes.

Die Auswerteschaltung 10 ermittelt zumindest aus der dem Abstand zwischen Fahrzeug 1 und dem Objekt O entsprechenden Größe auch eine Änderung der Größe mit der Zeit. Hieraus kann ermittelt werden, ob sich der Abstand zwischen Fahrzeug 1 und Objekt O vergrößert oder verkleinert. Im letzteren Fall kann davon ausgegangen werden, dass zumindest latent die Gefahr einer Kollision gegeben ist.

Daraus lässt sich ferner berechnen, wann eine Kollision als unvermeidbar angesehen werden muss, und zwar insbesondere abhängig von der Relativgeschwindigkeit zwischen dem Fahrzeug 1 und dem Objekt O und dem tatsächlich vorliegenden, gemessenen Abstand.

Zweckmäßig und vorteilhaft ermittelt die Auswerteschaltung 10 ferner aus der dem Abstand zwischen Fahrzeug 1 und dem Objekt O entsprechenden Größe auch eine Änderung der Größe mit der Zeit. Hieraus kann ermittelt werden, ob sich der Abstand zwischen Fahrzeug 1 und Objekt O vergrößert oder verkleinert. Im letzteren Fall kann davon ausgegangen werden, dass zumindest latent die Gefahr einer Kollision gegeben ist.

Daraus lässt sich ferner berechnen, wann eine Kollision als unvermeidbar angesehen werden muss, und zwar insbesondere abhängig von der Relativgeschwindigkeit zwischen dem Fahrzeug 1 und dem Objekt O und dem tatsächlich vorliegenden, gemessenen Abstand.

Da die Lage des Objektes O gegenüber dem Fahrzeug 1, jedenfalls bezüglich einer Referenzachse des Fahrzeuges 1, erfassbar oder berechenbar ist, kann durch laufende Berechnung der vermutliche Kollisionspunkt zwischen Fahrzeug 1 und Objekt O an dem Fahrzeug 1 in seinem Abstand zur Referenzachse und seinem Winkel zur Referenzachse ziemlich genau bestimmt werden. Abhängig davon können die Rückhaltemittel, die verschiedenen Sitzen des Fahrzeuges zugeordnet sind, in unterschiedlicher Weise angesteuert bzw. vorbereitet werden, so dass die Person in dem jeweiligen Sitz im Falle der durch den Beschleunigungssensor 6 erfassten tatsächlichen Kollision in jeweils optimaler Weise geschützt werden kann.

Wie erwähnt, können die dem Netzwerk 11 zugeführten Signale der Auswerteschaltung 10 nicht nur zur Vorbereitung der Rückhaltemittel 2 bis 5 verwendet werden, sondern auch zur Auslösung der oder einiger der reversibel ansteuerbaren Rückhaltemittel 4, 5, falls die Auswerteschaltung 10 ermittelt, dass eine Kollision als unvermeidbar angesehen werden muss. Diese Einschätzung kann fehlerhaft sein, beispielsweise, weil das betrachtete Objekt O nicht geeignet ist, eine gefährliche Kollision auszulösen, so dass es zweckmäßig ist, dann, wenn die von der Auswerteschaltung 10 ermittelte Zeit für das Eintreffen der Kollision um ein vorgegebenes Maß verstrichen ist, das entsprechende Signal in dem Netzwerk 11 gelöscht wird.

Im folgenden sei die grundsätzliche Wirkungsweise näher erläutet. Fig. 2 zeigt die verschiedenen Stufen A, B und C der gegenseitigen Annäherung des Fahrzeuges 1 und eines Objektes O, wobei es nur auf die Relativverhältnisse ankommt.

Im Falle von Fig. 2 A ist zunächst davon auszugehen, dass der Abstandssensor 9 des Fahrzeuges 1 noch nicht in der Lage ist, das Objekt O zu erfassen. Im Falle der Fig. 2 B hat der Abstandssensor 9 das Objekt O erfasst und misst kontinuierlich den gegenseitigen Abstand. Die Auswerteschaltung 10 ermittelt dann die Relativgeschwindigkeit und ermittelt ferner aus der Richtung der Annäherung weitere kollisionsspezifische Daten, und veranlasst dann, wenn die Auswerteschaltung 10 eine Kollision zwischen dem Fahrzeug 1 und dem Objekt O als unvermeidbar oder jedenfalls als zu erwarten ermittelt, die Abgabe entsprechender Signale über das Netzwerk 11 an die verschiedenen Rückhaltemittel 2 bis 5.

Fig. 3 zeigt beispielhaft die Situation, wie sie etwa in Fig. 2 C dargestellt ist. In Fig. 3 ist die Referenzachse 12 des Fahrzeuges 1 dargestellt. Zweckmäßig entspricht sie einer Fahrzeugmittenachse in Fahrzeuglängsrichtung. Falls nur ein Abstandssensor 9 vorgesehen ist, ist es zweckmäßig diese Referenzachse 12 so zu legen, dass sie durch den Abstandssensor 9 hindurchgeht. Es ist von Vorteil, wenn der Abstandssensor 9 ferner so ausgebildet ist, dass das Objekt O hinsichtlich der Lage (Richtung R) gegenüber der Referenzachse 12 bestimmbar ist. Dann kann in einfacher Weise aus dem gemessenen Abstand (Entfernung) und der Lagebeziehung laufend ein möglicher Aufprallpunkt 13 zwischen dem Fahrzeug 1 und dem Objekt O bestimmt werden, und zwar hinsichtlich des Abstandes dy zur Referenzachse 12 und hinsichtlich des Winkels α zur Referenzachse 12. Durch die kontinuierliche (oder quasi-kontinuierliche) ständige Erfassung des Abstandes zwischen Fahrzeug 1 und Objekt O und der Änderung dieses Abstandes lässt sich auch ohne die vorgenannte Maßnahme auf rein rechnerische Weise feststellen, ob und gegebenenfalls an welchem Aufprallpunkt 13 mit einer Kollision unter welchem Winkel α zu rechnen ist. Da sich aus der kontinuierlich bzw. quasi-kontinuierliche Messung des Abstandes auch die Relativgeschwindigkeit V zwischen dem Fahrzeug 1 und dem Objekt O ermitteln lässt, kann sehr präzise ermittelt werden, ob mit einer Kollision zu rechnen ist.

D. h., dass mit Hilfe der erfindungsgemäß vorgesehenen Abstandsmessung (Entfernungsmessung) und der laufenden Auswertung hinsichtlich statistischen Daten eine den tatsächlichen Verhältnissen sehr nahe kommende Analyse hinsichtlich der zu erwartenden Unfallschwere erfolgen kann. Gemäß der Weiterbildung ist ferner eine den tatsächlichen Verhältnisses sehr nahe kommende Situationsanalyse und - beschreibung möglich. Diese Situationsanalyse und Situationsbeschreibung wird um so genauer, je genauer das Verhalten des Objektes O erfasst werden kann. Bei auf Radarsystemen beruhenden Entfernungsmessungen können rechnerische Verfahren, wie sie bei der Spurverfolgung (Tracking) an sich bekannt sind, herangezogen werden, wobei das Eigenverhalten des Fahrzeuges 1 darüber hinaus mit zusätzlich berücksichtigt werden kann. Ist das Verhalten des Objektes O weitgehend ermittelt, so lässt sich daraus mittels bekannter Vorhersageverfahren (Prädiktionsverfahren) ermitteln, ob eine Kollision unmittelbar bevorsteht.

Die Erfindung wurde anhand einer Annäherung erläutet, bei dem sich das Objekt O dem Fahrzeug 1 im wesentlichen an deren Front (relativ) annähert, wobei der Abstandssensor 9 (gemäß Fig. 1) in dem Frontbereich angeordnet ist. Abhängig von dem Erfassungsbereich des Abstandssensors 9, der als etwa keulenartig betrachtet werden kann, kann es zweckmäßig sein, im Frontbereich des Fahrzeuges 1 mehr als einen Abstandssensor 9 oder über das Fahrzeug 1 verteilt mehrere Abstandssensoren 9 vorzusehen. Zweckmäßig überlappen sich die Erfassungsbereiche verschiedener Abstandssensoren 9. Dann kann, jedenfalls in gewissem Umfang, die Lage des Objektes O gegenüber dem Fahrzeug 1 insbesondere wenn es sich (relativ) durch einen solchen Überlappungsbereich bewegt, sehr genau erfasst werden, wobei diese Erfassung dann bei der Analyse berücksichtigt werden kann.

In Fig. 1 ist ferner angedeutet, dass eine einzige Auswerteschaltung 10 für mehreren Sitzen des Fahrzeuges 1 zugeordneten jeweiligen Rückhaltemitteln vorgesehen sein kann, was beispielsweise durch Gurtstraffer 3a und 3b angedeutet ist. Dabei ist zu berücksichtigen, dass die unterschiedlichen Sitze eines Fahrzeuges, Fahrersitz, Beifahrersitz, Rücksitze, in unterschiedlicher Weise mit Rückhaltemitteln ausgerüstet sein können und deren Ansteuerung je nach Ort aber auch Zeit und Schwere der Kollision (Aufprallort 13) sehr unterschiedlich sein sollte.

Die vorliegende Erfindung wurde anhand einer Anordnung erläutert, bei der jedes Rückhaltemittel eine eigene Ansteuerschaltung aufweist. Ferner wurde die Anordnung so erläutert, dass dem Abstandssensor 9 zur Abstandsmessung eine eigene Auswerteschaltung 10 zugeordnet ist, und dass dem Beschleunigungssensor 6 eine eigene Auswerteanordnung 7 zugeordnet ist. Selbstverständlich ist es möglich, einerseits die Auswerteschaltung 10 und den Abstandssensor 9 baulich zu vereinigen oder andererseits die Auswerteschaltung 10 und die jeweiligen Ansteuerschaltung der Rückhaltemittel zu integrieren. Auch kann die Auswerteanordnung 7 in eine solche integrierte Anordnung mit einbezogen sein.

Ferner ist die Erfindung grundsätzlich auch dann anwendbar, wenn ein Rückhaltemittel in mehreren Stufen, gegebenenfalls sogar adaptiv, ansteuerbar ist, etwa ein mehrstufig ansteuerbarer Airbag oder dergleichen.

## Patentansprüche

1. Verfahren zur Ansteuerung von insbesondere reversibel ansteuerbaren Rückhaltemitteln für Personen in einem Sitz in einem Fahrzeug bei der Erfassung einer Situation, bei der mit einer Kollision zwischen dem Fahrzeug (1) und einem Objekt (O) zu rechnen ist,
wobei der Abstand des Fahrzeuges (1) von dem Objekt (O) kontinuierlich erfasst wird,
wobei abhängig vom Vergleichsergebnis auf die Unfallschwere einer möglichen bevorstehenden Kollision zwischen dem Fahrzeug (1) und dem Objekt (O) geschlossen wird, abhängig davon Voransteuersignale für Ansteuereinrichtungen und/oder Auslöseeinrichtungen der Rückhaltemittel erzeugt und diesen zur Verfügung gestellt werden, wobei die reversibel ansteuerbaren Rückhaltemittel (4, 5) im Falle der Ermittlung einer unvermeidbaren oder tatsächlich bevorstehenden Kollision entsprechend angesteuert bzw. ausgelöst werden, während die irreversibel ansteuerbaren Rückhaltemittel (2, 3) nur im Fall einer sicher vorliegenden Kollision mit Verletzungsrisiko auslösbar (6, 7, 8) sind
wobei auf der Grundlage des erfassten Abstandes und anderer Kriterien wie der Änderung des erfassten Abstandes über die Zeit zumindest eines ermittelt wird von
- Relativgeschwindigkeit (V) zwischen Objekt (O) und Fahrzeug (1),
- Zeit bis zur zu erwartenden Kollision zwischen Objekt (O) und Fahrzeug (1),
- Ort (13) am Fahrzeug (1) der zu erwartenden Kollision zwischen Objekt (O) und Fahrzeug (1),
- Winkel (α) gegenüber einer Referenzachse (12) des Fahrzeuges (1) der zu erwartenden Kollision zwischen Objekt (O) und Fahrzeug (1),
**dadurch gekennzeichnet, daß**
der erfasste Abstand und statistisch ermittelte und hinsichtlich der jeweiligen Unfallschwere klassifizierte entsprechende Unfalldaten miteinander verglichen werden,

2. Verfahren nach Anspruch 1, **dadurch gekennzeichnet, dass** dann, wenn die Zeit, zu der die erwartete Kollision erfolgen sollte, um ein vorgegebenes Maß überschritten ist und eine tatsächliche Kollision nicht stattgefunden hat, die Auslösesignale für die reversibel ansteuerbaren Rückhaltemittel (4, 5) und die an Voransteuersignale für die irreversibel ansteuerbaren Rückhaltemittel (2,3) aufgehoben werden.

3. Anordnung zur Ansteuerung von insbesondere reversibel ansteuerbaren Rückhaltemitteln für Personen in einem Sitz in einem Fahrzeug bei der Erfassung einer Situation, bei der mit einer Kollision zwischen dem Fahrzeug (1) und einem Objekt (O) zu rechnen ist, mit mindestens einem Abstandssensor (9), der am Fahrzeug (1) befestigt ist und den Abstand zu dem Objekt (O) erfasst,
wobei eine Auswerteschaltung (10) abhängig von der durch, einen Vergleich ermittelten Unfallschwere einer möglichen bevorstehenden Kollision zwischen dem Fahrzeug (1) und dem Objekt (O) Voransteuersignale für Ansteuer- und/ oder Auslöseeinrichtungen der Rückhaltemittel (2, ... 5) erzeugt und diesen zur Verfügung stellt, wobei die reversibel ansteuerbaren Rückhaltemittel (4, 5) im Falle einer der Ermittlung unvermeidbar oder tatsächlich bevorstehenden Kollision entsprechend ansteuerbar bzw. auslösbar sind, während die irreversibel ansteuerbaren Rückhaltemittel (2, 3) erst bei Feststellen (6, 7, 8) einer tatsächlichen Kollision auslösbar sind, **dadurch gekennzeichnet, dass** die Auswerte schaltung die in einem zugeordneten Speicher (14) statistisch ermittelte und hinsichtlich der jeweiligen Unfallschwere klassifizierte entsprechende Unfalldaten erhält und den erfassten Abstand und die zugeordneten statistisch ermittelten Unfalldaten vergleicht, und dass die Auswerteschaltung die Ansteuer- bzw. Auslösesignale für die reversibel ansteuerbaren Rückhaltemittel (4, 5) und die Voransteuersignale für die irreversibel ansteuerbaren Rückhaltemittel (2, 3) aufhebt, wenn die Zeit, zu der die zu erwartenden Kollision erfolgen sollte, um ein vorgegebenes Maß überschritten ist und eine tatsächliche Kollision nicht stattgefunden hat.

## Revendications

1. Procédé pour amorcer des dispositifs de retenue notamment à amorce réversible pour des personnes assises dans un véhicule lors de la détection d'une situation dans laquelle on peut s'attendre à une collision entre le véhicule (1) et un objet (O), selon lequel
- on détecte en continu, l'écart entre le véhicule (1) et l'objet (O)
- on déduit en fonction du résultat de la comparaison la gravité de l'accident d'une collision possible à venir entre le véhicule (1) et l'objet (O), on génère en fonction de cela des signaux d'amorce préalable pour des dispositifs d'amorce et/ou des dispositifs de déclenchement des dispositifs de retenue et on les met à leur disposition, les dispositifs de retenue (4, 5) à amorce réversible étant amorcés et/ou déclenchés en conséquence en cas de détermination d'une collision inévitable ou effectivement à venir, alors que les dispositifs de retenue (2, 3) à amorce irréversible ne peuvent être déclenchés qu'en cas de collision existant à coup sûr avec des risques de blessure, et
- ou détermine sur la base de l'écart détecté et d'autres critères tels que la modification de l'écart détecté sur le temps, au moins un des éléments suivants :
- vitesse relative (V) entre l'objet (O) et le véhicule (1),
- temps jusqu'à la collision attendue entre l'objet (O) et le véhicule (1),
- emplacement (13) sur le véhicule (1) de la collision attendue entre l'objet (O) et le véhicule (1),
- angle (α) par rapport à un axe de référence (12) du véhicule de la collision attendue entre l'objet (O) et le véhicule (1),
**caractérisé en ce qu'**
on compare les uns aux autres l'écart détecté et les données d'accident correspondantes calculées statistiquement et classifiées par rapport à la gravité respective de l'accident.

2. Procédé selon la revendication 1,
**caractérisé en ce que**
lorsque le moment où la collision attendue devait se produire est dépassé d'une valeur donnée et qu'aucune collision n'a effectivement eu lieu, les signaux de déclenchement pour les dispositifs de retenue (4, 5) à amorce réversible et les signaux d'amorce préalable pour les dispositifs de retenue à amorce irréversible (2, 3) sont annulés.

3. Installation pour amorcer des dispositifs de retenue, notamment à commande réversible pour des personnes assises dans un véhicule lors de la détection d'une situation dans laquelle il faut s'attendre à une collision entre le véhicule (1) et un objet (O), à l'aide d'au moins un capteur de distance (9) fixé sur le véhicule (1) et détectant l'écart par rapport à l'objet (O), un circuit d'exploitation (10) générant des signaux d'amorce préalable pour des dispositifs d'amorce et/ou de déclenchement des moyens de retenue (2, ... 5) en fonction de la gravité de l'accident calculée par une comparaison d'une collision possible attendue entre le véhicule (1) et l'objet (O) et les mettant à disposition, les dispositifs de retenue (4, 5) à amorce réversible pouvant être amorcés et/ou déclenchés lorsqu'on détermine qu'une collision est inévitable ou est effectivement à venir, alors que les dispositifs de retenue (2, 3) à amorce irréversible ne peuvent être déclenchés que lorsqu'on détermine (6, 7, 8) qu'une collision a effectivement eu lieu,
**caractérisée en ce que**
le circuit d'exploitation reçoit les données d'accident correspondantes calculées statistiquement dans une mémoire associée (14) et classifiées par rapport à la gravité respective de l'accident et compare l'écart détecté et les données d'accident calculées statistiquement associées, et le circuit d'exploitation annule les signaux d'amorce et/ou de déclenchement pour les dispositifs de retenue à amorce réversible (4, 5) et les signaux d'amorce préalable pour les dispositifs de retenue à amorce irréversible (2, 3) lorsque le moment où la collision attendue devait se produire est dépassé d'une valeur donnée et qu'aucune collision n'a effectivement eu lieu.

## Claims

1. Method for actuating restraining means, in particular ones which can be actuated reversibly, for persons in a seat in a vehicle when a situation in which a collision between the vehicle (1) and an object (O) can be expected is being sensed,
the distance between the vehicle (1) and the object (O) being sensed continuously,
the severity of the accident arising from a possible, imminent collision between the vehicle (1) and the object (O) being concluded as a function of the comparison result and pre-actuation signals for actuation devices and/or triggering devices of the restraining means being generated as a function thereof and being made available to said restraining means, the restraining means (4, 5) which can be actuated reversibly being correspondingly actuated and/or triggered if an unavoidable or actually imminent collision is detected, while the restraining means (2, 3) which can be actuated irreversibly can be triggered (6, 7, 8) only if a collision with a risk of injury is definitely occurring,
in which case at least one of the following is determined on the basis of the sensed distance and other criteria such as the change in the sensed distance over time
- relative velocity (V) between the object (O) and vehicle (1),
- time until the anticipated collision between the object (O) and vehicle (1),
- location (13) on the vehicle (1) of the anticipated collision between the object (O) and vehicle (1),
- angle (α) with respect to a reference axis (12) of the vehicle (1) of the anticipated collision between the object (O) and vehicle (1),
**characterized in that** the sensed distance and statistically detected, corresponding accident data items which are classified in terms of the respective severity of accident are compared with one another.

2. Method according to Claim 1, **characterized in that** if the time at which the anticipated collision should take place is exceeded by a predefined degree and an actual collision has not taken place, the triggering signals for the restraining means (4, 5) which can be actuated reversibly and the pre-actuation signals for the restraining means (2, 3) which can be actuated irreversibly are cancelled.

3. Arrangement for actuating restraining means, in particular ones which can be actuated reversibly, for persons in a seat in a vehicle when a situation in which a collision between the vehicle (1) and an object (O) can be expected is sensed, having at least one distance sensor (9) which is attached to the vehicle (1) and senses the distance from the object (O), an evaluation circuit (10) generating pre-actuation signals for actuating devices and/or triggering devices of the restraining means (2, ... 5) as a function of the severity of an accident which is determined by a comparison and arises from a possible, imminent collision between the vehicle (1) and the object (O), and said evaluation circuit (10) making said pre-actuation signals available to said actuating devices and/or triggering devices, the restraining means (4, 5) which can be actuated reversibly being capable of being correspondingly actuated or triggered if an unavoidable or actually imminent collision is detected, while the restraining means (2, 3) which can be actuated irreversibly cannot be triggered until an actual collision is detected (6, 7, 8), **characterized in that** the evaluation circuit keeps the statistically determined, corresponding accident data items which have been classified in terms of the respective severity of accident in an assigned memory (14) and compares the sensed distance and the assigned, statistically determined accident data, and **in that** the evaluation circuit cancels the actuation signals or triggering signals for the restraining means (4, 5) which can be actuated reversibly and cancels the pre-actuation signals for the restraining means (2, 3) which can be actuated irreversibly if the time at which the anticipated collision was supposed to take place is exceeded by a predefined degree and an actual collision has not taken place.
